Europäisches Patentamt

(19) European Patent Office    (11) Numéro de publication: **0 113 145**

Office européen des brevets    **B1**

(12)    # FASCICULE DE BREVET EUROPÉEN

(45) Date de publication du fascicule du brevet:    (51) Int. Cl.⁴: **B 25 J 17/00**
26.11.86

(21) Numéro de dépôt: **83201759.4**

(22) Date de dépôt: **13.12.83**

(54) Dispositif de liaison à plusieurs degrés de liberté.

(30) Priorité: **17.12.82 FR 8221389**

(43) Date de publication de la demande:
**11.07.84 Bulletin 84/28**

(45) Mention de la délivrance du brevet:
**26.11.86 Bulletin 86/48**

(84) Etats contractants désignés:
**CH DE GB IT LI NL SE**

(73) Titulaire: **CENTRE NATIONAL DE LA RECHERCHE SCIENTIFIQUE (CNRS), 15, Quai Anatole France, F-75007 Paris (FR)**

(72) Inventeur: **Clot, Jean, 5 rue des Vignes, F-31650 Saint Orens (FR)**
Inventeur: **Falipou, Jean, 5 rue des Pyrénées, F-31750 Escalquens (FR)**

(74) Mandataire: **Barre, Philippe, Cabinet Barre, Gatti, Laforgue 95, rue des Amidonniers, F-31069 Toulouse Cedex (FR)**

(56) Documents cité:
**EP-A-0 017 016**
**CH-A-290 405**
**FR-A-1 500 113**
**FR-A-2 032 026**
**FR-A-2 328 950**
**GB-A-2 033 010**
**US-A-3 279 624**
**US-A-3 284 964**
**US-A-4 060 178**
**US-A-4 099 409**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention concerne un dispositif mobile de liaison entre un élément porteur et un élément porté. Un tel dispositif permet de faire subir à l'élément porté des déplacements suivant plusieurs degrés de liberté par rapport à l'élément porteur.

Dans l'état actuel de la technique, la robotique utilise différents types de bras manipulateurs (hydrauliques, pneumatiques, électriques) constituant l'élément porteur, l'élément porté étant constitué par un outil, généralement outil de préhension. La puissance du bras se trouve difficilement compatible avec la rapidité et surtout avec la précision de ses déplacements: les bras manipulateurs à câbles ou à rubans ont une bonne précision mais leur puissance est limitée tandis que les bras à action hydraulique sont puissants mais manquent souvent de précision. On a résolu partiellement ce problème en dotant le bras manipulateur d'un organe de liaison souple, par exemple poignet de Nevins, apte à se déformer sous une contrainte dont il donne la grandeur et la direction. Il faut également que le bras puisse effectuer des déplacements de faible amplitude avec une grande précision en vue de réaliser l'assemblage souhaité. On a également envisagé la construction de bras dotés de poignets effectuant des déplacements de faible amplitude avec précision, mais ceux-ci nécessitent un grand nombre de moteurs munis de réducteurs lourds et encombrants qui reduisent d'autant la puissance du bras.

Par ailleurs, le brevet EP publié sous le n° 0017016 et le brevet US n° 3 284 964 décrivent des dispositifs en forme de "trompe d'éléphant", qui peuvent être mus hydrauliquement; ces dispositifs présentent toutefois le défaut de nécessiter la présence de systèmes extérieurs de mise en pression tels que compresseurs ou autres, la position des divers éléments de ces dispositifs étant dépendante d'une pression exterieure dont le contrôle précis est toujours délicat.

Le document EP-A-0 017 016 a servi de base pour l'élaboration du préambule de la revendication 1.

L'objectif essentiel de la présente invention est de pallier les inconvénients des dispositifs connus, en fournissant un dispositif mobile de liaison permettant des mouvements puissants et de bonne précision.

Un autre objectif de la présente invention est de fournir un dispositif de liaison bénéficiant d'un poids réduit par rapport à ceux de l'art antérieur.

Un autre obrejtif est de fournir un dispositif de liaison permettant des déplacements qui présentent une résolution suffisamment fine pour être monté sur un bras manipulateur quelconque (donc de prix de revient peu élevé).

Un autre objectif est de fournir un dispositif de liaison permettant des déplacements d'amplitude suffisante de l'élément porté par rapport à l'élément porteur, avec une puissance, une rapidité et une précision superieures a celles obtenues avec les bras manipulateurs de l'art antérieur.

Le dispositif mobile de liaison visé par l'invention comprend:
- une membrure-support adaptée pour être fixée sur l'élément porteur (bras manipulateur),
- une membrure mobile adaptee pour permettre la fixation de l'élément porté (organe terminal),
- une pluralité de vérins souples comportant chacun une paroi déformable s'étendant autour d'un axe dit longitudinal et des parois rigides de fixation situées à chaque extrémité de ladite paroi déformable, lesdits vérins souples étant agencés entre la membrure-support et la membrure mobile de façon à maintenir ladite membrure mobile par rapport à ladite membrure-support dans une position relative fonction de l'ensemble des états de déformation desdits vérins souples,
- et des moyens de commande à distance des vérins souples.

Selon la présente invention, ce dispositif est caractérisé en ce que:
- les moyens de commande à distance des vérins souples comprennent, associé et connecté à chacun desdits vérins souples, un réservoir de capacité variable constitué d'un récipient à parois rigides comportant au moins un élément à paroi déformable muni de moyens d'entraînement de ladite paroi déformable en vue de permettre une variation de la capacité du réservoir, lesdits moyens de commande étant adaptés pour actionner les moyens d'entraînement de façon à imposer à l'ensemble des réservoirs de capacité variable des capacités déterminant un ensemble d'états de déformation des vérins souples permettant d'obtenir la position désirée de la membrure mobile,
- des moyens de mesure de l'état de déformation de chaque vérin souple sont reliés aux moyens de commande des moyens d'entrainement en vue d'obtenir un ajustement en boucle fermée du déplacement désiré de la membrure mobile par rapport à la membrure-support.

3P est a noter que, en lui-même, un reservoir a capacté variable est un moyen connu, en particulier decrit dans le document CH-A-290 405.

Un tel dispositif selon l'invention permet donc, grâce à son agencement, de donner à l'élément porté une position précise, à partir d'une position approximative de l'extrémité de l'élément porteur, par déplacements obtenus en actionnant l'ensemble des vérins souples. Le fonctionnement des vérins est produit par variation de la capacité des réservoirs associés à chaque vérin. Il est essentiel de noter que le circuit de fluide fermé étanche auquel chaque vérin souple est associé, évite la mise en oeuvre de systèmes extérieurs de mise en pression et confère au dispositif une position d'équilibre neutre indépendante de toute pression extérieure.

En outre, les moyens de mesure permettent, après un positionnement approximatif de l'element porteur, de déterminer la grandeur et la direction des contraintes auxquelles est soumis l'élément porté et de commander les moyens d'entrainement des vérins souples en vue de réaliser l'assemblage souhaité par un positionnement precis de l'élément porté.

Une autre caractéristique du dispositif selon l'invention réside dans le fait que chaque réservoir à capacité variable comporte une pluralité d'éléments à paroi déformable entraînée par des électro-aimants, les dimensions de chacun de ces élements étant adaptées pour que les variations de capacité soient dans un rapport binaire, en vue de leur commande par un système numérique.

Selon une autre caractéristique, les vérins souples peuvent presenter une hauteur de grande dimension par rapport à leur diamètre.

On peut ainsi obtenir des déplacements de grande amplitude de l'élément porté par rapport à l'élément porteur. Un tel dispositif constitue alors en soi un bras manipulateur alliant la puissance des systèmes hydrauliques à la precision du dispositif décrit dans les paragraphes précédents.

L'invention sera mieux comprise à la lecture de la description qui suit, en référence aux dessins annexés qui en présentent, à titre d'exemple non limitatif, des modes de réalisation préférentiels.

Sur ces dessins qui font partie intégrante de l'invention:

- la figure 1 représente une coupe radiale d'un poignet d'assemblage selon l'invention,
- la figure 2 représente une coupe transversale du même poignet d'assemblage,
- la figure 3 représente une vue en perspective d'un vérin souple utilisé dans l'invention,
- la figure 4 représente une coupe schématique d'un réservoir de capacité variable selon l'invention,

La figure 5 représente une coupe schématique d'un ensemble vérins souples réservoirs de capacité variable travaillant en mode différentiel,
- la figure 6 représente une coupe longitudinale d'un bras hydraulique selon l'invention,
- la figure 7 représente une coupe transversale du même bras, et
- la figure 8 représente une vue du même bras en position deformée.

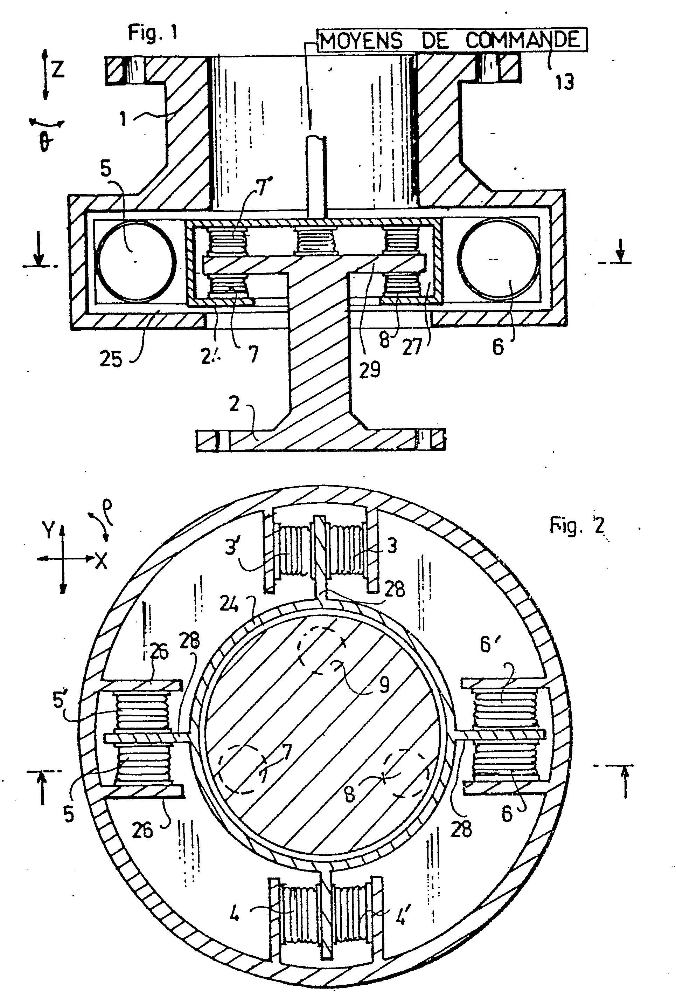

Le poignet d'assemblage représenté sur les figures 1 et 2 comporte une membrure-support 1 destinée à être fixée par tout moyen connu en soi à l'extrémité d'un élément porteur, par exemple un bras manipulateur (non représenté). Il comprend également une membrure mobile 2 (ou plateau mobile) sur laquelle peut être fixé de maniere connue en soi un élément porté, par exemple un outil d'assemblage ou une pince de préhension (non représenté). Entre ces deux membrures sont agencés une pluralité de vérins souples 3, 3', 4, 4', 5, 5', 6, 6', 7, 7', 8, 8', 9 et 9'.

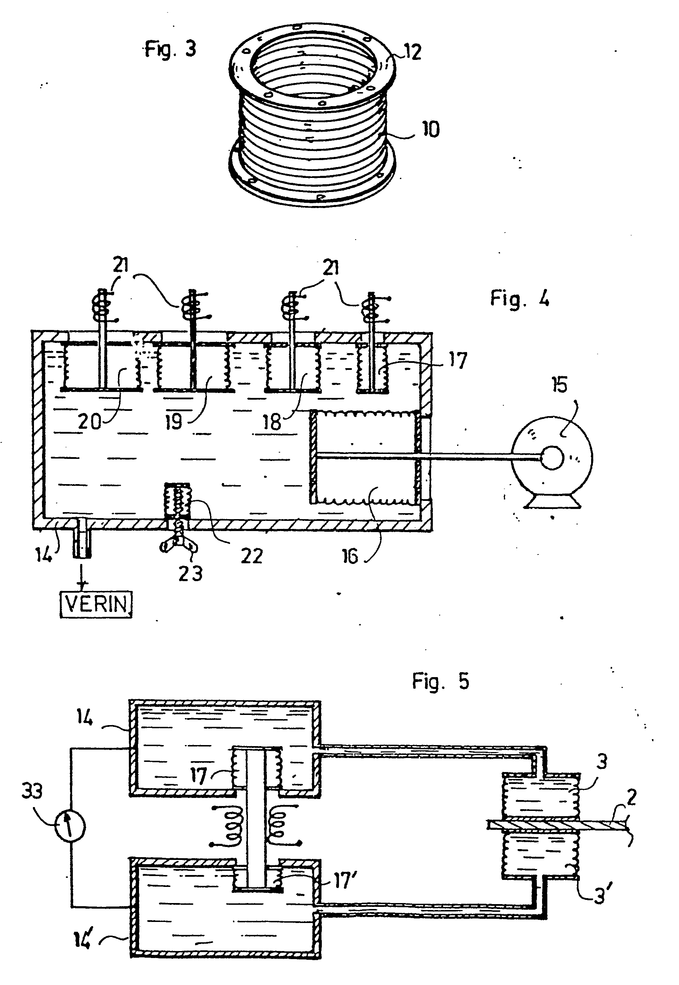

Comme on peut le voir sur la figure 3, ces vérins sont constitués par un corps sensiblement cylindrique 10, à paroi flexible en forme d'accordéon, solidaire, à chaque extrémité d'une bague 12 rigide de fixation. Au repos, la paroi flexible s'étend autour d'un axe longitudinal 11. Ces vérins sont de préférence hydrauliques et fonctionnent de la manière suivante: lorsque l'on introduit à l'intérieur d'un vérin un volume d'huile supérieur au volume dudit vérin à l'état de repos, la paroi déformable 10 s'étire, entraînant un éloignement des bagues de fixation 12. Inversement, le retrait d'un volume provoque un tassement de la paroi déformable 10 entraînant un rapprochement des bagues 12 de fixation.

Des moyens de commande 13 permettent d'actionner les vérins. Ces moyens de commande 13 comprennent, associé et connecté à chaque vérin, un réservoir de capacité variable (représenté figure 4) comprenant un récipient 14 à paroi rigide auquel est relié au moins un élément à paroi déformable semblable aux vérins souples décrits ci-dessus mais dont la bague de fixation d'une extrémité est fermée. Ces éléments à paroi déformable sont munis de moyens d'entraînement solidaires de l'extrémité fermée. Un déplacement de cette extrémité provoque donc une variation de la capacité du réservoir.

La figure 4 montre plusieurs formes de réalisation de ces moyens d'entraînement. Un moteur pas à pas 15 entraîne l'extrémité fermé libre de l'élément à paroi déformable 16. Celui-ci a de préférence un volume au repos égal à celui du vérin souple associé. Un déplacement de l'extrémité libre fermée de l'élément 16, causé par le moteur 15 entraine une variation de la capacité du réservoir. Une quantité d'huile en plus ou en moins dans le réservoir entraîne une quantité d'huile en moins ou en plus dans le vérin souple et actionne celui-ci. On peut également actionner le vérin souple au moyen d'une pluralité d'éléments à paroi déformable 17, 18, 19, 20 dont les volumes sont dans un rapport binaire, c'est-à-dire que le volume de l'élément 17 est moitié de celui de l'élément 18, lui-même moitié de celui de l'élément 19 qui est lui-même moitié de l'élément 20. Ces éléments, ici au nombre de quatre donné a titre d'exemple non limitatif, sont actionnés par des électro-aimants 21 dont l'alimentation est commandée par un système numérique. Si l'élément 17 a un volume égal au quinzième du volume du vérin souple associé, la commande des électro-aimants 21 suivant un système numérique binaire permet le de placement pas à pas de l'élément porté 2 par rapport à l'élément porteur 1 avec un pas correspondant au quinzième de l'amplitude possible de déplacement.

Les liquides n'étant pas entièrement incompressibles et étant susceptibles de variations de volume fonction de variations de température, on peut prévoir un petit élément à paroi déformable 22 commandé par une vis 23 permettant d'effectuer un réglage de compensation.

Chaque vérin souple est muni de moyens de mesure (non représentés) de l'état de sa déformation. Ces moyens de mesure permettent de déterminer avec précision la position exacte de l'élément porté. Reliés aux moyens de commande 13 des moyens d'entraînement 15, 21 des éléments à paroi déformable, il permettent également d'effectuer, en boucle fermée une commande en dimension extrêmement précise. Ces moyens de mesure peuvent par exemple utiliser une détection capacitive, ou un système optique comportant des fibres optiques ou des cellules photo-électriques, ou encore un système à ultra-sons travaillant en phase ou en mode impulsionnel. Il est bien évident que ces moyens de mesure, connus en soi, sont donnés à titre d'exemple non limitatif et que d'autres moyens de mesure peuvent être utilisés.

Il peut être particulièrement intéressant de travailler en mode différentiel, l'ensemble pouvant être, à l'équilibre déjà sous précontrainte ce qui minimise l'effet des déformations parasites.

Un tel ensemble est représenté figure 5. Sur cette figure, deux vérins souples 3, 3' sont actionnés par deux réservoirs de capacité variable 14, 14' comportant au moins un élément à paroi deformable 17, 17' actionnés par un électro-aimant à double action muni de deux enroulements d'excitation. L'alimentation d'un de ces enroulements provoque une augmentation de la capacité de l'un des réservoirs et une diminution de la capacité de l'autre réservoir. Ces variations de capacité entraînent une diminution de la hauteur du vérin associé au premier réservoir et une augmentation de la hauteur du vérin associé au second réservoir. La membrure mobile 2, solidaire des extrémités voisines des deux vérins se déplace donc sous l'effet des variations de hauteurs des deux vérins.

En plus des moyens de mesure de l'état des déformations de chaque vérin adapté pour commander les moyens d'entraînement des éléments à paroi déformable des réservoirs à capacité variable, on dispose entre les deux réservoirs un détecteur de pression 33 dont le rôle est le suivant: si la membrure mobile 2 est soumise à une contrainte, il se crée à l'intérieur des réservoirs une différence de pression fonction de la grandeur et du sens de la contrainte. Les vérins 3 et 3' étant agencés pour provoquer un déplacement de la membrure mobile 2 dans une direction donnée, la différence de pression détectée entre les réservoirs indique également la direction de la contrainte. Cette indication permet la commande des moyens d'entraînement et lorsque la différence de pression devient nulle, on est assuré que la membrure mobile a atteint la position désirée.

Dans la forme de réalisation du poignet d'assemblage représenté sur les figures 1 et 2, on a prévu une membrure intermédiaire 24. La membrure-support 1 comporte un corps creux 25 dont les faces internes sont munies de moyens de fixation 26 pour les parois rigides de vérins souples Sur la figure 2, on peut voir que ces moyens de fixation sont au nombre de Huit formant quatre paires agencées à 90°. Sur ces moyens de fixation est assujettie une extrémité des vérins souples 3, 3', 4, 4', 5, 5', 6 et 6'. La membrure intermédiaire 24 comporte également un corps creux 27 et ses faces externes sont munies de moyens de fixation 28 pour les parois rigides de vérins souples. Sur la figure 2, on peut voir que ces moyens de fixation sont au nombre de quatre répartis à 90°. La membrure intermédiaire 24 est agencée à l'intérieur du corps creux 25 de la membrure support 1 de façon que les moyens de fixations 28 viennent s'intercaler entre les vérins souples 3 et 3', 4 et 4', 5 et 5', 6 et 6'.

La membrure mobile 2 comporte une platine 29 de chaque côté de laquelle est fixée l'une des parois rigides des vérins souples souples 7, 7', 8, 8', 9, 9'. L'autre paroi rigide de ces vérins est fixée à l'intérieur du corps creux 27 de la membrure intermédiaire 24. Ces vérins sont répartis de part et d'autre de la platine 29 selon un angle de 120°.

Dans l'exemple de réalisation décrit sur les figures 1 et 2, un vérin portant une référence et le vérin portant la même référence accompagnée du signe ' constituent un ensemble différentiel tel qu'il a été décrit en regard de la figure 5.

Les vérins souples sont répartis en trois groupes dont nous allons expliciter le fonctionnement: un premier groupe Gx, constitué des vérins 3, 3', 4, 4', un deuxième groupe Gy, constitué des vérins 5, 5', 6, 6' et un troisième groupe Gz, constitué des vérins 7, 7', 8, 8', 9, 9'. Lorsque tous les vérins du groupe Gx sont actionnés de façon que les vérins 3 et 4, respectivement 3' et 4' subissent une déformation de même sens, la membrure intermédiaire 24 portant la membrure mobile 2 se déplace suivant une direction marquée X sur la figure 2. De même, lorsque tous les vérins du groupe Gy sont actionnes de façon que les verins 5 et 6, respectivemet 5, et 6, subissent une déformation de même sens, la membrure intermédiaire 24 se déplace suivant une direction marquée Y sur la figure 2. De même, lorsque les trois vérin 7, 8, 9 respectivement 7', 8', 9', sont actionnés de façon à subir des déformations de même sens, la membrure mobile 2 se déplace dans une direction marquée Z sur la figure 1. Les déplacements suivant les directions X, Y, Z sont des déplacements linéaires.

En actionnant simultanément les vérins des groupes Gx et Gy de façon que les déformations subies par les vérins 3, 6, 4', 5', respectivement 3', 6', 4, 5 soit de même sens, alors que la membrure intermédiaire effectue par rapport à la membrure support 1 un mouvement de rotation indiqué par $\rho$ sur la figure 2. De même, un actionnement différencié des vérins du groupe Gz entraîne un déplacement oscillatoire de la membrure mobile 2 par rapport à la membrure intermédiaire 24 suivant trois directions dont une est indiquée par $\theta$ sur la figure 1. On obtient ainsi un système de liaison mobile à sept degrés de liberté ce qui permet, par une commande individuelle de chaque système différentiel de vérins, d'obtenir des déplacements dans toutes les directions.

Dans le cas du poignet mobile d'assemblage qui vient d'être décrit les déplacements nécessaires de l'élément porté par rapport à l'élément porteur ne sont que de faible amplitude. La grandeur des déplacements étant déterminée par la déformation de la paroi latérale des vérins dans le sens de leur hauteur, celle-ci sera faible et en tout cas inférieure au diamètre desdits vérins.

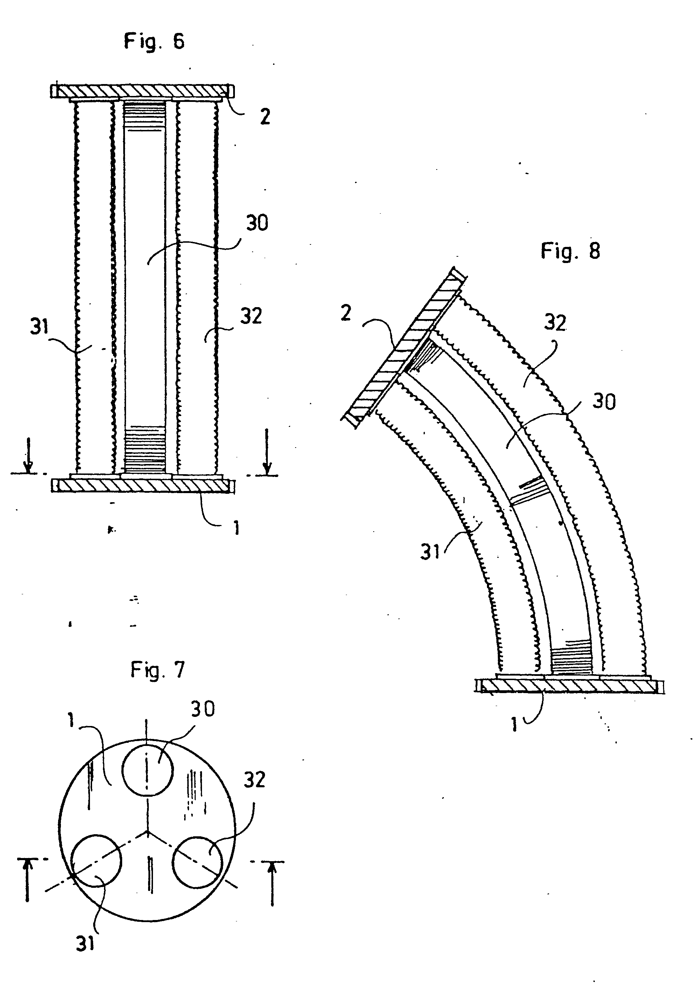

En référence aux figures 6 à 8, il est décrit un dispositif mobile de liaison permettant de faire subir à l'élément porté des déplacements de grande amplitude par rapport à l'élément porteur. Un tel dispositif constitue un bras hydraulique de manutention.

Sur la figure 6, on peut voir la membrure support 1 et la membrure mobile 2 constituée toutes deux par une platine circulaire. La membrure 1 est destinée à être fixée sur un châssis porteur (non représenté). Un outil de travail (élément porté non représenté) est fixé sur la membrure mobile 2. Trois vérins 30, 31, 32 sont fixés par leurs bagues de fixation entre les membrures 1 et 2. A chaque vérin est associé et connecté un réservoir à capacité variable semblable à celui décrit ci-dessus. Chaque vérin est également muni de moyens de mesure. Ces trois vérins sont répartis sur les membrures suivant un angle de 120° de façon que leurs axes soient au repos parallèles à une même direction. Les déplacements souhaités étant ici de grande amplitude, les vérins 30, 31, 32 présentent une hauteur nettement plus grande que leur diamètre.

L'actionnement différencié de chacun des trois vérins provoque des déplacements fonction de l'état des déformations de chaque vérin. On peut obtenir ainsi un grand nombre de positions dans l'espace.

Il est évident que l'on peut agencer entre la membrure support 1 et la membrure mobile 2 une ou plusieurs membrures intermédiaires, un groupe de trois vérins étant agencé entre deux membrures voisines, ce qui augmente d'autant le nombre de positions qu'il est possible de donner à l'élément porté.

Un grand avantage des dispositifs de liaison mobile décrits ci-dessus réside dans le fait que les vérins peuvent être commandés à distance, ceux-ci étant reliés aux moyens de commande par un faisceau de conduites hydrauliques et de câbles électriques de mesure.

Il est à noter que le dispositif conforme à l'invention peut être utilisé pour manoeuvrer en rotation des bras manipulateurs (ou tout autre organe) en permettant un entraînement de charges importantes; il suffit d'asservir un point de la membrure mobile de façon à lui imposer un mouvement circulaire.

Il est également possible de conférer à la membrure mobile un mouvement alternatif de va-et-vient, par une commande cyclique des vérins.

## Revendications

1/ - Dispositif mobile de liaison, à plusieurs degrés de liberté, entre un élément porteur et un élément porté, permettant de faire subir des déplacements à l'élément porté par rapport à l'element porteur, comprenant:
- une membrure-support (1) adaptée pour être fixée sur l'élément porteur,
- une membrure mobile (2) adaptée pour permettre la fixation de l'élément porté,
- une pluralité de vérins souples (3, 3', 4, 4', 5, 5', 6, 6', 7, 7', 8, 8', 9, 9', 30, 31, 32) comportant chacun une paroi déformable (10) s'étendant autour d'un axe (11) dit longitudinal et des parois (12) rigides de fixation situées à chaque extrémité de ladite paroi déformable (10), lesdits vérins souples étant agencés entre la membrure-support (1) et la membrure mobile (2) de façon à maintenir ladite membrure mobile (2) par rapport à ladite membrure-support (1) dans une position relative fonction de l'ensemble des etats de déformation desdits vérins souples,
- et des moyens (13) de commande à distance des vérins souples, ledit dispositif étant caractérisé en ce que:
- les moyens (13) de commande à distance des vérins souples comprennent, associé et connecté à chacun desdits vérins souples, un réservoir de capacité variable constitué d'un récipient à parois rigides (14) comportant au moins un élément à paroi déformable (16, 17, 18, 19, 20, 22) muni de moyens (15, 21, 23) d'entrainement de ladite paroi déformable en vue de permettre une variation de la capacité du réservoir, lesdits moyens de commande (13) étant adaptés pour actionner les moyens d'entrainement (15, 21, 23) de façon à imposer à l'ensemble des réservoirs de capacité variable des capacités déterminant un ensemble d'états de déformation des vérins souples permettant d'obtenir la position désirée de la membrure mobile (2),
- des moyens de mesure de l'état de déformation de chaque vérin sont reliés aux moyens de commande (13) en vue d'obtenir un ajustement en boucle fermée du déplacement désiré de la membrure mobile (1) par rapport à la membrure-support (1).

2/ - Dispositif selon la revendication 1, dans lequel les moyens d'entraînement de la paroi déformable (16) du réservoir de capacité variable comprennent un moteur pas à pas (15).

3/ - Dispositif selon la revendication 1, caractérisé en ce que le réservoir comporte une pluralité d'éléments (17, 18, 19, 20) à paroi déformable entraînée par des électro-aimants (21), les dimensions de chacun de ces éléments étant adaptés pour que les variations de capacité soient dans un rapport binaire en vue de leur commande par un système numérique.

4/ - Dispositif selon l'une des revendications 1, 2 ou 3, comprenant au moins une membrure intermédiaire (24) agencée entre la membrure-support (1) et la membrure mobile (2), une partie desdits vérins souples étant fixée par l'une de leurs parois rigides à ladite membrure-support (1) et par l'autre paroi rigide à ladite membrure intermédiaire (24), l'autre partie des vérins souples étant fixée par l'une de leurs parois rigides à la membrure intermédiaire (24) et par l'autre paroi rigide à la membrure mobile (2), ledit dispositif étant caractérisé en ce que les vérins souples sont répartis suivant trois groupes agencés de façon que les axes longitudinaux des vérins de chacun des groupes soient, au repos, parallèles à trois directions différentes.

5/ - Dispositif selon la revendication 4, comprenant:

- un premier groupe (Gx) de vérins souples (3, 3', 4, 4') agencés entre la membrure-support (1) et la membrure intermédiaire (24) avec leur axe parallèle à une direction X,

- un deuxième groupe (Gy) de vérins souples (5, 5', 6, 6') agencés entre la membrure-support (1) et la membrure intermédiaire (24) avec leur axe parallèle à une direction Y,

- et un troisième groupe (Gz) de vérins souples (7, 7', 8, 8', 9, 9') agencés entre la membrure intermédiaire (24) et la membrure mobile (2) avec leur axe parallèle à une direction Z perpéndiculairé au plan forme par les directions X et Y.

6/ - Dispositif selon la revendication 5, caractérisé en ce que:

- la membrure-support (1) comprend un corps creux (25) dont les faces internes sont munies de moyens de fixation (26) de parois rigides de fixation des vérins souples des groupes (Gx) et (Gy),

- la membrure intermédiaire (24) comprend, agencé à l'intérieur de la membrure-support (1), un corps creux (27) dont les faces externes sont munies de moyens (28) de fixation des autres parois rigides des vérins souples des groupes (Gx) et(Gy),

- et la membrure mobile (2) comprend une platine (29) agencée à l'intérieur de la membrure intermédiaire (24) en vue de la fixation des vérins souples du groupe (Gz) entre la membrure mobile (2) et la membrure intermédiaire (24).

7/ - Dispositif selon l'une des revendications 1 à 6, caractérisé en ce qu'à chaque ensemble formé d'un vérin souple et d'un réservoir de capacité variable est associé un second ensemble formé d'un vérin souple et d'un réservoir de capacité variable, agencé de façon à former avec ledit premier ensemble un système différentiel.

8/ - Dispositif selon la revendication 7, caractérisé en ce qu'il est doté de moyens de mesure de la grandeur et de la direction des contraintes existantes sur l'élément porté, lesdits moyens de mesure comprenant un détecteur de pression (33) agencé entre les deux réservoirs (14, 14') de capacité variable d'un même système différentiel.

9/ - Dispositif selon l'une des revendications 1 à 8, dans lequel les vérins souples et les éléments à paroi déformable des réservoirs de capacité variable sont constitués par un corps sensiblement cylindrique (10) à paroi flexible en forme d'accordéon, solidaire à chaque extrémité d'une bague rigide (12) de fixation.

10/ - Dispositif selon l'une des revendications 1 à 9, permettant de faire subir à l'élément porté des déplacements de faible amplitude par rapport à l'élément porteur, dans lequel les parois flexibles des vérins souples présentent une hauteur inférieure à leur diamètre, même en position d'étirement maximum.

11/ Dispositif selon la revendication 10, caractérisé en ce qu'il forme un poignet mobile d'assemblage, l'élément porteur étant constitué par un bras mécanique ou hydraulique de manutention à l'extrémité duquel est fixée la membrure-support (1), et l'élément porté étant constitué par un outil de travail, en particulier une pince de préhension, fixée sur la membrure mobile (2).

12/ - Dispositif selon l'une des revendications 1 à 9, permettant de faire subir à l'élément porté des déplacements de grande amplitude par rapport à l'élément porteur, caractérisé en ce que les parois flexibles des vérins souples présentent une hauteur supérieure à leur diamètre, même en position de compression maximale.

13/ - Dispositif selon la revendication 12, caractérisé en ce que les vérins souples sont répartis suivant trois groupes (30, 31, 32) agencés à 120° sur l'élément porteur de façon que les axes des vérins de chacun des groupes soient, au repos, parallèles à une même direction.

14/ - Dispositif selon l'une des revendications 1 à 13, dans lequel les réservoirs de capacité variable, les moyens de commande et d'entraînement sont agencés à distance des vérins souples et sont reliés à ceux-ci au moyen d'un faisceau de conduites hydrauliques de commande des vérins souples et de câbles électriques de mesure de l'état de déformation desdits vérins.

**Patentansprüche**

1. Bewegliche Verbindungsvorrichtung mit mehreren Freiheitsgraden zwischen einem Träger-Element und einem getragenen Element, welche es ermöglicht, das getragene Element Verschiebungen gegenüber dem Träger-Element zu unterziehen, umfassend

- ein zur Befestigung am Träger-Element eingerichtetes Stützgestell (1),

- ein dazu eingerichtetes bewegliches Gestell (2), die Befestigung des getragenen Elements zu ermöglichen,

- eine Vielzahl von biegsamen Hebevorrichtungen (3, 3', 4, 4', 5, 5', 6, 6', 7, 7', 8, 8', 9, 9', 30, 31, 32), welche jeweils eine verformbare Wand (10) enthalten, welche sich um eine sog. Längsachse (11) erstreckt, sowie starre, an jedem Ende der besagten verformbaren Wand (10) liegende Befestigungswände (12), wobei besagte biegsame Hebevorrichtungen derart zwischen dem Stützgestell (1) und dem beweglichen Gestell (2) angeordnet sind, dass sie besagtes bewegliches Gestell (2) gegenüber besagtem Stützgestell (1) in einer von der Gesamtheit der Verformungszustände besagter biegsamer Hebevorrichtungen abhängigen relativen Lage halten, und

- Fernsteuerungsmittel (13) für die biegsamen Hebevorrichtungen, wobei besagte Vorrichtung dadurch gekennzeichnet ist, dass

- die Fernsteuerungsmittel (13) für die biegsamen Hebevorrichtungen ein jeder der besagten biegsamen Hebevorrichtungen zugeordnetes und mit ihr verbundenes Vorratsbecken mit veränderlichem Fassungsvermögen umfassen, welches aus einem Behälter mit starren Wänden (14) und mindestens einem Element mit verformbarer Wand (16, 17, 18, 19, 20, 22) besteht, ausgerüstet mit Antriebsmitteln (15, 21, 23) für besagte verformbare Wand, um das Fassungsvermögen des Vorratsbeckens sich verändern lassen zu können, wobei besagte Steuermittel (13) dazu eingerichtet sind, die Antriebsmittel (15, 21, 23) derart zu betätigen, dass sie der Gesamtheit der Vorratsbecken mit veränderlichem Fassungsvermögen solche Fassungsvermögen geben, welche eine Gesamtheit von Verformungszuständen der biegsamen Hebevorrichtungen bestimmen, wodurch ermöglicht wird, die gewünschte Lage des beweglichen Gestells (2) zu erhalten,

- Mittel zum Messen des Verformungszustands jeder Hebevorrichtung mit den Steuermitteln (13) verbunden sind, um eine Einstellung in geschlossener Schlinge der gewünschten Verschiebung des beweglichen Gestells (2) gegenüber dem Stützgestell (1) zu erhalten.

2. Vorrichtung nach Anspruch 1, bei welcher die Antriebsmittel für die verformbare Wand (16) des Vorratsbekkens mit veränderlichem Fassungsvermögen einen Schrittmotor (15) umfassen.

3. Vorrichtung nach Anspruch 1, dadurch gekennzeichnet, (17, 18, 19, 20) mit verformbarer Wand enthält, welche durch Elektromagneten (21) angetrieben wird, wobei die Abmessungen des jeweiligen Elements derart beschaffen sind, dass sich die Veränderungen des Fassungsvermögens in einer binären Beziehung hinsichtlich ihrer Steuerung durch ein Ziffern-System befinden.

4. Vorrichtung nach einem der Ansprüche 1, 2 oder 3, umfassend mindestens ein zwischen dem Stützgestell (1) und dem beweglichen Gestell (2) angeordnetes Zwischengestell (24), wobei ein Teil besagter biegsamer Hebevorrichtungen mit einer ihrer starren Wände an besagtem Stützgestell (1) und mit der anderen starren Wand an besagtem Zwischengestell (24) befestigt ist und wobei der andere Teil der biegsamen Hebevorrichtungen mit einer ihrer starren Wände am Zwischengestell (24) und mit der anderen starren Wand am beweglichen Gestell (2) befestigt ist, wobei besagte Vorrichtung dadurch gekennzeichnet ist, dass die biegsamen Hebevorrichtungen in drei Gruppen in derartiger Anordnung verteilt sind, dass die Längsachsen der Hebevorrichtungen jeder der Gruppen im Ruhezustand parallel zu drei verschiedenen Richtungen liegen.

5. Vorrichtung nach Anspruch 4, umfassend -
eine erste Gruppe (Gx) biegsamer Hebevorrichtungen (3, 3', 4, 4'), welche zwischen dem Stützgestell (1) und dem Zwischengestell (24) mit ihrer Achse parallel zu einer Richtung X angeordnet sind,

- eine zweite Gruppe (Gy) biegsamer Hebevorrichtungen (5, 5', 6, 6'), welche zwischen dem Stützgestell (1) und dem Zwischengestell (24) mit ihrer Achse parallel zu einer Richtung Y angeordnet sind, und

- eine dritte Gruppe (Gz) biegsamer Hebevorrichtungen (7, 7', 8, 8', 9, 9'), welche zwischen dem Zwischengestell (24) und dem beweglichen Gestell (2) mit ihrer Achse parallel zu einer senkrecht zu der durch die Richtungen X und Y gebildeten Ebene liegenden Richtung Z angeordnet sind.

6. Vorrichtung nach Anspruch 5, dadurch gekennzeichnet, dass

- das Stützgestell (1) einen Hohlkörper (25) umfasst, dessen Innenflächen mit Befestigungsmitteln (26) für die starren Befestigungswände der biegsamen Hebevorrichtungen der Gruppen (Gx) und (Gy) ausgerüstet sind,

- das Zwischengestell (24), innerhalb des Stützgestells (1) angeordnet, einen Hohlkörper (27) umfasst, dessen Aussenflächen mit Befestigungsmitteln (28) für die anderen starren Wände der biegsamen Hebevorrichtungen der Gruppen (Gx) und (Gy) ausgerüstet sind, und

- das bewegliche Gestell (2) eine Platte (29) umfasst, welche innerhalb des Zwischengestells (24) zur Befestigung der biegsamen Hebevorrichtungen der Gruppe (Gz) zwischen dem beweglichen Gestell (2) und dem Zwischengestell (24) angeordnet ist.

7. Vorrichtung nach einem der Ansprüche 1 bis 6, dadurch gekennzeichnet, dass den aus einer biegsamen Hebevorrichtung und einem Vorratsbecken mit veränderlichem Fassungsvermögen gebildeten Konstruktionen jeweils eine zweite, aus einer biegsamen Hebevorrichtung und einem Vorratsbecken mit veränderlichem Fassungsvermögen gebildete Konstruktion zugeordnet und dazu eingerichtet ist, mit besagter erster Konstruktion ein Differenzial-System zu bilden.

8. Vorrichtung nach Anspruch 7, dadurch gekennzeichnet, dass sie mit Mitteln zum Messen der Grösse und der Richtung der obwaltenden Spannungen auf dem getragenen Element versehen ist, wobei besagte Messmittel einen zwischen den beiden Vorratsbecken (14, 14') mit veränderlichem Fassungsvermögen desselben Differnzial-Systems angeordneten Druckanzeiger (33) umfassen.

9. Vorrichtung nach einem der Ansprüche 1 bis 8, bei welcher die biegsamen Hebevorrichtungen und die verformbare Wände aufweisenden Elemente der Vorratsbecken mit veränderlichem Fassungsvermögen aus einem ungefähr zylinderförmigen Körper (10) mit biegsamer Wand nach Ziehharmonika-Art bestehen, welcher einstückig mit jedem Ende eines starren Befestigungsrings (12) verarbeitet ist.

10. Vorrichtung nach einem der Ansprüche 1 bis 9, welche es ermöglicht, das getragene Element Verschiebungen geringer Amplitude gegenüber dem Träger-Element zu unterziehen, bei welcher die biegsamen Wände der biegsamen Hebevorrichtungen eine Höhe aufweisen, welche selbst im weitest ausgezogenen Zustand geringer als ihr Durchmesser ist.

11. Vorrichtung nach Anspruch 10, dadurch gekennzeichnet, dass sie ein bewegliches Montage-Verbindungsglied bildet, wobei das Träger-Element aus einem mechanischen oder hydraulischen Handhabungs-Arm besteht, an dessen Ende das Stützgestell (1) befestigt ist, und wobei das getragene Element aus einem am beweglichen Gestell (2) befestigten Werkzeug, insbesondere einer Greifzange, besteht.

12. Vorrichtung nach einem der Ansprüche 1 bis 9, welche es ermöglicht, das getragene Element Verschiebungen grosser Amplitude gegenüber dem Träger-Element zu unterziehen, dadurch gekennzeichnet, dass die biegsamen Wände der biegsamen Hebevorrichtungen eine Höhe aufweisen, welche selbst im meist zusammengedrückten Zustand grösser als ihr Durchmesser ist.

13. Vorrichtung nach Anspruch 12, dadurch gekennzeichnet, dass die biegsamen Hebevorrichtungen in drei Gruppen (30, 31, 32) verteilt sind, welche unter einem Winkel von 120° auf dem Träger-Element derart angeordnet sind, dass die Achsen der Hebevorrichtungen jeder der Gruppen im Ruhezustand parallel zur gleichen Richtung liegen.

14. Vorrichtung nach einem der Ansprüche 1 bis 13, bei welcher die Vorratsbecken mit veränderlichem Fassungsvermögen, die Steuer- und Antriebsmittel im Abstand zu den biegsamen Hebevorrichtungen angeordnet und mit diesen mittels eines Bündels von hydraulischen Steuer-Röhren für die biegsamen Hebevorrichtungen und elektrischen Kabeln zum Messen des Verformungszustands besagter Hebevorrichtungen verbunden sind.

## Claims

1. Movable connecting device, having several degrees of freedom, between a carrier element and a carried element, enabling the carried element to be subjected to movements relative to the carrier element, comprising

- a supporting frame (1), designed to be fixed on to the carrier element;
- a movable frame (2), designed to enable the carried element to be fixed;
- a plurality of flexible jacks (3, 3', 4, 4', 5, 5', 6, 6', 7, 7', 8, 8', 9, 9', 30, 31, 32), each containing a deformable wall (10), extending about an axis (11), the so-called longitudinal axis, and rigid fixing walls (12), located at each end of said deformable wall (10), said flexible jacks being arranged between the supporting frame (1) and the movable frame (2), so as to maintain said movable frame (2), relative to said supporting frame (1), in a relative position which is a function of the aggregate of the states of deformation of said flexible jacks and
- remote control means (13) for the flexible jacks, said device being characterised in that
- the remote control means (13) for the flexible jacks comprise, associated and connected with each of said flexible jacks, a reservoir of variable capacity, consisting of a container having rigid walls (14) and containing at least one element having a deformable wall (16, 17, 18, 19, 20, 22), equipped with drive means (15, 21, 23) for said deformable wall, with a view to enabling the capacity of the reservoir to be varied, said control means (13) being designed to operate the drive means (15, 21, 23), so as to give the whole of the variable capacity reservoirs capacities which determine an aggregate of states of deformation of the flexible jacks, enabling the desired position of the movable frame (2) to be obtained;
- means of measuring the state of deformation of each jack are connected with the control means (13), with a view to obtaining a closed loop adjustment of the desired movement of the movable frame (2), relative to the supporting frame (1).

2. Device according to Claim 1 in which the drive means for the deformable wall (16) of the variable capacity reservoir comprise a stepper motor (15).

3. Device according to Claim 1, characterised in that the reservoir contains a plurality of elements (17, 18, 19, 20), having deformable walls, driven by electromagnets (21), the dimensions of each of these elements being designed such that the capacity variations are in a binary relationship with respect to their control by a numerical system.

4. Device according to one of the Claims 1, 2 or 3, comprising at least one intermediate frame (24), placed between the supporting frame (1) and the movable frame (2), one part of said flexible jacks being fixed by one of their rigid walls to said supporting frame (1) and, by the other rigid wall, to said intermediate frame (24), the other part of the flexible jacks being fixed by one of their rigid walls to the intermediate frame (24) and, by the other rigid wall, to the movable frame (2), said device being characterised in that the flexible jacks are distributed in three groups, arranged so that the longitudinal axes of the jacks in each of the groups are parallel to three different directions, when at rest.

5. Device according to Claim 4, comprising
- a first group (Gx) of flexible jacks (3, 3,, 4, 4'), placed between the supporting frame (1) and the intermediate frame (24), with their axis parallel to a direction X;
- a second group (Gy) of flexible jacks (5, 5', 6, 6'), placed between the supporting frame (1) and the intermediate frame (24), with their axis parallel to a direction Y, and
- a third group (Gz) of flexible jacks (7, 7', 8, 8', 9, 9'), placed between the intermediate frame (24) and and the movable frame (2), with their axis parallel to a direction Z, at right angles to the plane formed by the directions X and Y.

6. Device according to Claim 5, characterised in that
- the supporting frame (1) comprises a hollow body (25), the internal surfaces of which are equipped with fixing means (26) for the rigid fixing walls of the flexible jacks of groups (Gx) and (Gy);
- the intermediate frame (24) comprises, placed inside the supporting frame (1), a hollow body (27), the external surfaces of which are equipped with fixing means (28) for the other rigid walls of the flexible jacks of groups (Gx) and (Gy), and
- the movable frame (2) comprises a plate (29), placed inside the intermediate frame (24), for fixing the flexible jacks of group (Gz) between the movable frame (2) and the intermediate frame (24).

7. Device according to one of the Claims 1 to 6, characterised in that a second assembly, formed by a flexible jack and a variable capacity reservoir, is associated with each assembly, formed by a flexible jack and a variable capacity reservoir, and is arranged so as to form a differential system with said first assembly.

8. Device according to Claim 7, characterised in that it is provided with means for measuring the size and the direction of the prevailing strain on the carried element, said measuring means comprising a pressure indicator (33), placed between the two variable capacity reservoirs (14, 14') of the same differential system.

9. Device according to one of the Claims 1 to 8, in which the flexible jacks and the elements, having deformable walls, of the variable capacity reservoirs consist of an approximately cylindrical body (10), having a flexible wall in concertina fashion and being integrated with each end of a rigid fixing ring (12).

10. Device according to one of the Claims 1 to 9, enabling the carried element to be subjected to movements which are of low amplitude relative to the carrier element, in which the flexible walls of the flexible jacks have a height smaller than their diameter, even when fully stretched.

11. Device according to Claim 10, characterised in that it forms a movable assembly link, the carrier element consisting of a mechanical or hydraulic handling arm, to the end of which the supporting frame (1) is fixed, and the carried element consisting of a working implement, particularly gripping tongs, fixed to the movable frame (2).

12. Device according to one of the Claims 1 to 9, enabling the carried element to be subjected to movements of large amplitude relative to the carrier element, characterised in that the flexible walls of the flexible jacks have a height greater than their diameter, even when under maximum compression.

13. Device according to Claim 12, characterised in that the flexible jacks are distributed in three groups (30, 31, 32), arranged at 120° on the carrier element, so that the axes of the jacks in each of the groups are parallel to the same direction when at rest.

14. Device according to one of the Claims 1 to 13, in which the variable capacity reservoirs, the control and drive means are placed at a distance from the flexible jacks and are connected with the latter by means of a bundle of hydraulic tubes for the control of the flexible jacks and of electrical cables for measuring the state of deformation of said jacks.

0 113 145

Fig. 1

MOYENS DE COMMANDE

Fig. 2

1

Fig. 3

Fig. 4

VERIN

Fig. 5

Fig. 6

2

30

31

32

1

Fig. 8

2

32

30

31

1

Fig. 7

1

30

32

31